# EUROPEAN PATENT SPECIFICATION

(11) **EP 2 067 685 B1**
(45) Date of publication and mention of the grant of the patent: **26.03.2014**
(21) Application number: 08170598.0
(22) Date of filing: 03.12.2008
(51) Int. Cl.: G01J 5/02, G01J 5/08, G01J 5/04, G01J 5/00, B61K 9/04

(54) **Apparatus for contactless measurement of temperatures of a rail car**
Vorrichtung zur kontaktlosen Temperaturmessung eines Schienenfahrzeugs
Appareil pour la mesure sans contact des températures d'un véhicule ferroviaire

(30) Priority: 07.12.2007 DE 102007058993
(43) Date of publication of application: 10.06.2009
(73) Proprietor: Progress Rail Services Corporation, Albertville, AL 35950 (US)
(72) Inventor: Konrad, Andreas, 67277, Frankenthal (DE); Hesser, Peter, 67376, Harthausen (DE)
(74) Representative: Preuss, Udo

(56) References cited:
- WO-A1-01/28838
- FR-A1- 2 752 806
- US-A- 3 440 416
- US-A- 3 545 005
- US-A- 5 331 311
- US-A- 5 660 470
- WETZLER G R ET AL: "INNOVATIVE SENSORIK UND AUSWERTEVERFAHREN ZUR LOESUNG KOMPLEXER UEBERWACHUNGSAUFGABEN", SIGNAL + DRAHT, TELZLAFF VERLAG GMBH. DARMSTADT, DE, vol. 89, no. 6, 1 June 1997 (1997-06-01), pages 5-08, XP000779901, ISSN: 0037-4997

## Description

### BACKGROUND

The invention concerns an apparatus for contactless measurement of infrared radiation of at least one region of a rail car.

In rolling rail traffic, excessive temperatures in the bearing of axes or at disc or block brakes may affect the roadworthiness of cars or locomotives. In particular, an overheating in a bearing area may cause a derailment.

Thus, hot box detectors and hot wheel detectors are used. These devices include an infrared detector for detecting a temperature at the wheel, the brake, or at the bearing. A temperature measurement is executed only if an axis (e.g., of an axle) passes the apparatus. The apparatus for temperature measurement is generally fixed at a rail tie. A wheel sensor in the track bed triggers the sample moments for measuring the temperatures so that only at desired moments the temperature measurement is performed.

A hot box detector or a hot wheel detector is extremely important in freight traffic. Further, in passenger traffic or in high speed traffic the speed must be reduced if a hot box detector or a hot wheel detector is missing.

In the European railway system, two different brake systems are primarily used, namely, block brakes that act on the running surface of the wheels and disc brakes that act on the sides of the wheels or on separate brake discs. Therefore, at least two spaced apart regions of the wheel must be monitored, namely a region near the axis, where the disc brakes are disposed and a region near the wheel rim for the block brakes. If a temperature measurement cannot be allocated to a block brake or a disc brake, false alarms can occur due to hot brake blocks that are hot due to braking.

Also in the region of the bearings two distinct spaced apart regions must be monitored in the European railway traffic.

The hot box detector and the hot wheel detector are, as already explained, arranged in the track bed, in particular in a tie. The infrared detectors must be exactly calibrated, adjusted, and dampedly fixed in the tie (that is, fixed in place in a manner that prevents or at least reduces movement of the detector due to passing rail traffic or otherwise). Such a calibration requires a lot of time, during which the track in which the hot box detector or the hot wheel detector is disposed cannot be used by a train, since maintenance staff is on or near the track. These long calibration times lead to long idle periods of the track and thus to lower profitability for the operator of a track.

Wetzler G R et al: "Innovative Sensorik und Auswerteverfahren zur Lösung komplexer Überwachungsaufgaben", Signal+Draht, Telzlaff Verlag GmbH, Darmstadt, DE, vol. 89, no. 6, 1 June 1997, pages 5-8, XP000779901, ISSN: 0037-4997 discloses a hot box and blocked brake detection system for railways using advanced sensors and software technologies.

US 5 331 311 A discloses a temperature sensor assembly for monitoring railroad car wheels including an array of temperature detectors arranged to generate a temperature profile of the wheel. The assembly may be arranged to monitor the wheel either transversely or in parallel to the direction of wheel movement.

FR 2 752 806 A1 discloses a sensor for monitoring the temperature of axle boxes of a moving train comprising an optical block including a bar of infrared elements and an electronic block for processing temperature signals.

US 3 545 005 A discloses an infrared hotbox detector utilizing a detector scanner which may be carried by a track. The detector includes a detector housing fixedly mounted between two ties of the track.

### BRIEF DESCRIPION

The object of the present invention is, therefore, to improve the known apparatus such that the drawbacks of the state of the art are overcome, in particular such that the apparatus provides reliable and concise measurement results with a reduced technical complexity.

The object is solved by an apparatus for contactless measurement of infrared radiation as disclosed in claim 1.

If all optical elements are geometrically fixed with respect to each other in a single unit, said elements may be calibrated and aligned in said unit, and may later be inserted in the track bed. Thus, blocking times of the track bed that generates high costs for the operator are reduced.

Though, it may be provided that the measurement module is elastically connected by an elastic bearing with the mounting. Thus, vibrations of a rail car driving about the rail may be absorbed, which would otherwise have influenced the electronics and/or the measurement result.

Further, in an embodiment it may be provided that the optical element of the mounting is a shutter for interrupting the infrared radiation between the object to measure and the measurement module, wherein the shutter comprises in the direction of the measurement module a reference heating element. Though, a displacement of the reference heating element with respect to the measurement module may be avoided, so that the apparatus may be calibrated outside the track bed and it may be created according to a characteristic curve, before the track is blocked for the traffic.

Though, the mounting may be a covering for covering an installation space for the apparatus. Therefore, with the covering the complete apparatus is removed from the track bed, which in turn leads to time saving. Thus, the covering must be stationary arranged in the track bed, for example in a tie.

In a typical embodiment of the apparatus, the shutter closes an opening in the covering. Thus, the measurement module is protected from effects from the weather.

A typical embodiment of the apparatus includes a mirror, in particular a plane mirror, wherein the mirror is connected to the measurement module, such that the mirror, measurement module, and optical element of the mounting have a fixed geometry relative to each other, and have for operation a predetermined relation to each other that is configurable before the installation.

Though, it may be provided that an angle between the directed detection region and the mounting is adjustable with an angle adjusting mechanism, wherein in particular a continuous angular range between the directed detection region and the mounting is adjustable. Though, the measurement module may be pivotally connected to the mounting about a pivot axis.

In a further embodiment of the apparatus, the measurement module is connected to the mounting about an inner arc of a circle element and an outer arc of a circle element, wherein the inner arc of a circle element and the outer arc of a circle element are concentric, and an outer radius of the outer arc of a circle element corresponds to the inner radius of the inner arc of a circle element.

Though, an elastic bearing may be disposed between the angle adjustment mechanism and the measurement module, preferably between each angle adjustment mechanism and the measurement module.

In a further embodiment the mounting is adapted to be positionable in predefined discrete linearly displaced positions relative to the rail.

Another aspect of the present disclosure is an apparatus for contactless measurement of infrared radiation of two regions of a rail car, wherein in one example, the apparatus includes a first infrared sensor adapted to measure the first region, and a second infrared sensor adapted to measure the second region independently of the measurement of the first region, wherein a common optical element is provided for measuring the first and second regions with the first infrared sensor or a second infrared sensor respectively.

With the apparatus according to this aspect, infrared radiation of two distinct regions of a rail car may be measured from a place in a track bed. A rail car may be a locomotive, a car, a motor coach, or the like. Thus, only a single measurement apparatus needs to be used. This reduces the costs for an operator of a rail network, as less apparatuses have to be installed in the track bed. Particularly advantageous is that the apparatus has small external dimensions. With a common optical element, the apparatus can be produced cheaper and more simply, wherein it uses at the same time less space. A measurement is independent from another measurement, if the infrared radiation of a first region affects the infrared sensor for the measurement of the second region only insignificantly.

Though, it may be provided that the first and/or the second region are spaced apart from each other, in particular having a distance of 10 cm to 30 cm, preferably from 15 cm to 20 cm. Therefore, regions that are distant of each other, i.e., separated regions, may be detected.

An example may be characterized in that the first and/or the second region have a length of 10 mm to 50 mm, in particular from 20 mm to 30 mm.

Though, it may be provided that the apparatus is adapted for a measurement of a first and a second region, wherein the regions are arranged at a distance from in the apparatus of 50 cm to 80 cm, in particular 55 cm to 70 cm.

Though, the first infrared sensor may have a distance from the second infrared sensor between 3 mm and 10 mm, in particular between 4 mm and 8 mm, preferably between 5 mm and 6 mm.

Further, in an example it may be provided that the optical element is provided for a resolution for infrared waves to image the first region separately from the second region.

In a typical example the optical element may include a lens, a filter, and/or an aperture. Though, the filter may be selectively permeable such that it is permeable for infrared rays. Thus, essentially only photons of the infrared rays to be measured may reach the infrared sensors.

In a typical example, the apparatus is characterized in that the optical element comprises a lens and an aperture, wherein the aperture is arranged between the infrared sensors and the lens, wherein the aperture is an aperture stop. Therefore, it is possible to adjust the optical element exactly to the infrared sensor, so that a maximal intensity of the infrared rays reach the infrared detectors.

In a further example, the optical element includes an optical axis, where the first infrared sensor and/or the second infrared sensor is/are disposed with a distance to the optical axis, wherein in particular the first infrared sensor and/or the second infrared sensor is/are disposed with the same distance to the optical axis. Though, a space saving arrangement for a measurement of two separated regions is enabled.

Though, it may be provided that the first and/or the second infrared sensor comprise at least one, in particular two or more than two infrared detectors.

Though, in the direction of the entering radiation in front of the infrared detectors a cold shield aperture may be disposed, and the infrared detector with the cold shield aperture and the optical element are adjusted to each other, in particular the optical element has a focal ratio that is adjusted for the infrared detector with the cold shield aperture.

In a further example, the apparatus may include a reference infrared detector element, wherein the apparatus is adapted to treat measurement signals from the first and the second infrared sensor and of the reference infrared detector element.

Further, the apparatus may include a first mirror, wherein at least a part of the first region of the rail car is disposed substantially vertical relative to the track bed above the mirror.

In another example, the apparatus may include a second mirror, wherein at least a part of the second region is disposed substantially vertical relative to the track bed above the mirror.

Though, the first and/or the second mirror may be a plane mirror. Thereby, using a plane mirror, only the optical elements in the detector apparatus change the imaging characteristics of the image of the region to measure, so that the mirror may be disposed nearly arbitrarily in relation to the detector apparatus. In case the mirror is disposed very close to the detector apparatus, the mirror can form a unit with the detector apparatus, which precludes the detector apparatus from absorbing a part of the infrared radiation behind or around the mirror.

Further it may be provided that the apparatus is adapted to be placed in a track bed, preferably in a tie.

### BRIEF DESCRIPTION OF THE DRAWINGS

Further features and advantages of the invention are described in the following description, in which several examples and embodiments of the invention are explained in detail with respect to schematic drawings; wherein:
Fig. 1 shows a cross section of a track section with a hot box detector and a hot wheel detector;
Fig. 2 shows a schematic arrangement of measurement regions;
Fig. 3 shows a schematic view of an infrared detector;
Fig. 4 shows a schematic optical assembly of a detector apparatus;
Fig. 5 shows a first mirror arrangement for a detector apparatus;
Fig. 6 shows a second mirror arrangement for a detector apparatus;
Fig. 7 shows a third mirror arrangement for a detector apparatus;
Fig. 8 shows a fourth mirror arrangement for a detector apparatus;
Fig. 9 shows a fifth mirror arrangement for a detector apparatus;
Fig. 10 shows a schematic side view of a hot box detector;
Fig. 11 shows a bottom view of a mounting for a detector apparatus;
Fig. 12 shows a top view of a fixing frame for a mounting according to Fig. 11; and
Fig. 13 shows a side view of a hot wheel detector.

### DETAILED DESCRIPTION

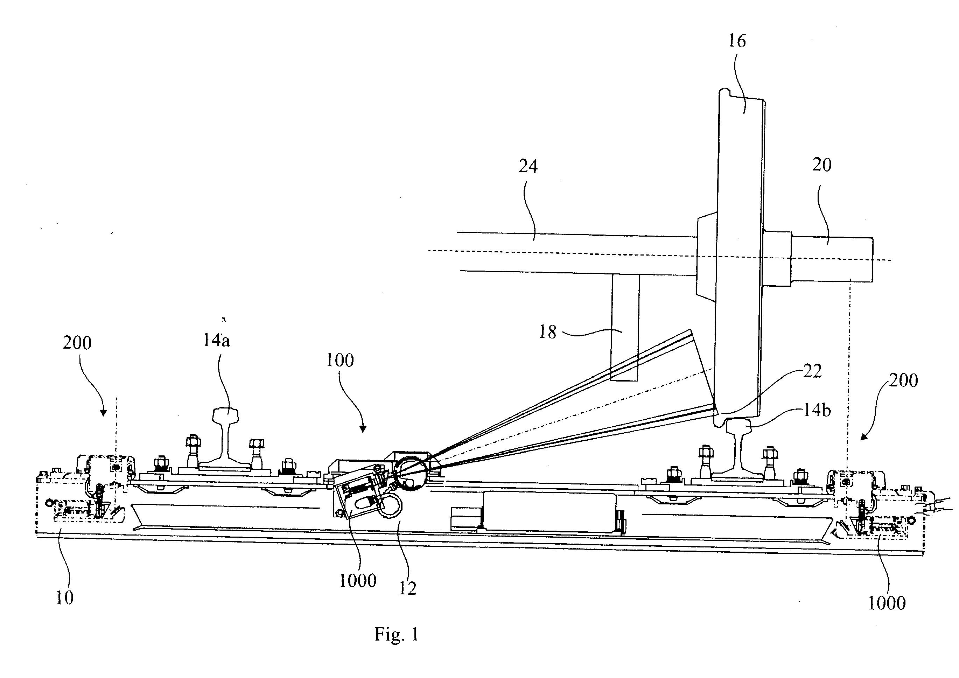

Fig. 1 shows a cross section of a track bed, in which a hot wheel detector 100 and two hot box detectors 200 are arranged. The hot wheel detector 100 is arranged in tie 10 with a cutout 12 between two rails 14a, 14b. On the rail 14b, a wheel 16 is shown that turns about an axis 18 and that has at its outer side a bearing 20. The hot wheel detector may detect both a first measurement region at a wheel rim 22 for the temperature that is caused by block brakes and a second measurement region at a brake disc 24. The brake disc 24 can also be arranged directly at the inner side of the wheel 16, wherein in Fig. 1 only half of a so-called shaft brake disc 24 up to the axis 18 is shown. Further, in Fig. 1 a hot box detector 200 is shown that is also arranged in the tie 10. The hot box detector 200 measures the bearing temperature of the bearing 20 of the axis 18. Thereby the hot box detector 200 may measure two spaced apart regions of the bearing. Two distinct regions of the bearing must be measured as different cars or locomotives of different countries have different regions to measure that have a different distance to the center of said track, i.e., to the center between the rails 14a, 14b. The hot box detector 200 and the hot wheel detector 100 each include a detector apparatus 1000 explained in more detail below.

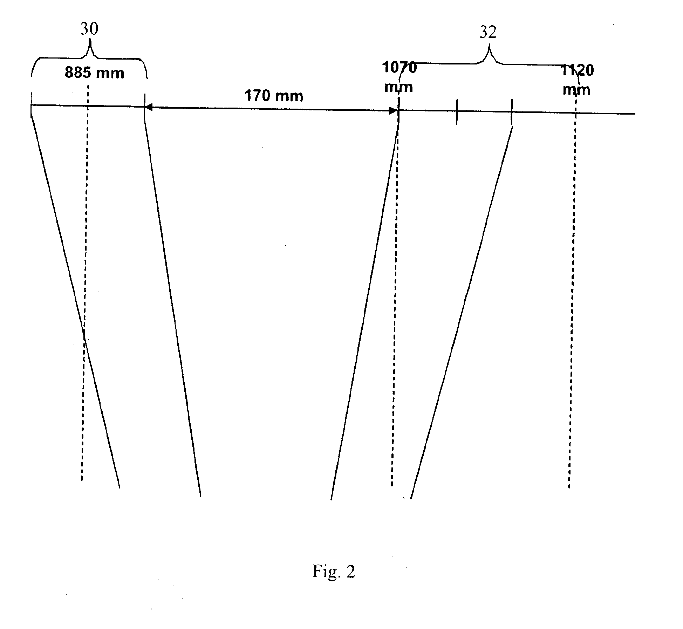

In Fig. 2 two different regions of a bearing 20 to measure are explained. A first region 30 may be placed in a distance of approximately 885 mm to the center of the track. A second region 32 may be placed in a distance between 1070 mm and 1120 mm of the center of the track bed. Though, the first region 30 and the second region 32 have a distance of 170 mm. Though, the first and the second region may be disposed about 580 mm above the upper side of the rail.

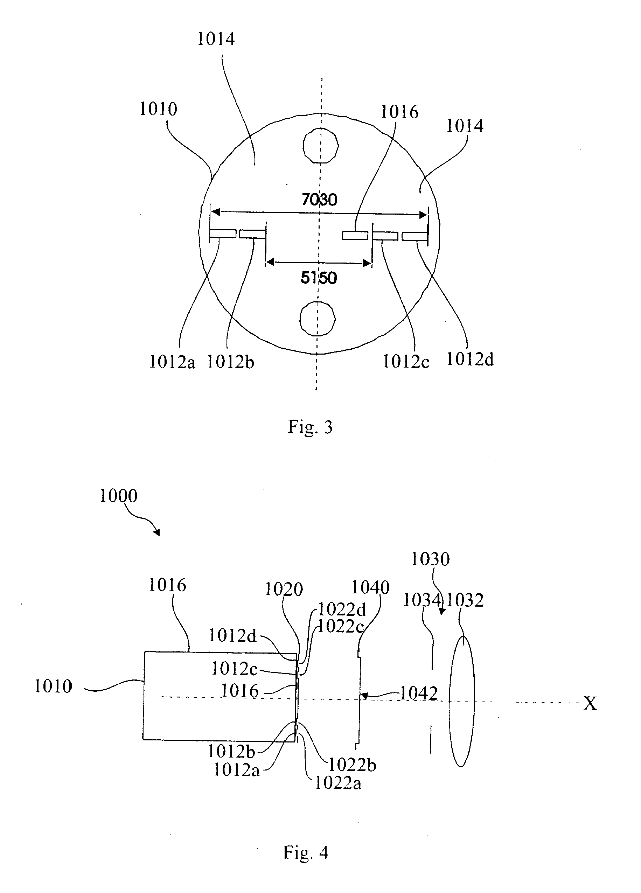

Each detector apparatus 1000 has an infrared detector 1010. In Fig. 3 such an infrared detector 1010 of a detector apparatus 100 is shown in a front view, i.e., in direction of the measurement. The infrared detector 1010 has four detector elements 1012a, 1012b, 1012c, 1012d. The detector elements 1012a, 1012b, 1012c, 1012d are disposed in a straight line on a front side 1014 of the infrared detector 1010. At an arbitrary position of a front side 1014 of the infrared detector 1010 a reference detector element 1016 may be disposed. The detector elements 1012a, 1012b, 1012c, 1012d or the reference detector element 1016 each have a surface of about 440 µm x 150 µm. Though, they may have a pitch of 500 µm. A pitch is a resulting center-to-center distance between each detector element 1012a, 1012b or 1012c, 1012d. Two detector elements 1012a, 1012b and 1012c, 1012d form respectively a detector element pair or an infrared sensor that is provided for a region to be measured. Naturally, also more than two detector elements or only one detector element for a region to be measured may be provided, wherein the detector elements may be grouped. Detector elements are grouped, as explained for said case of the detector element pairs, for having in case of a failure of a first detector element still a second detector element for a measurement. To simplify the description in the following, only the word detector element pair is used. For example, the detector element pair 1012a, 1012b may be provided for the first region 30 and the second detector element pair 1012c, 1012d may be provided for the second detection region 32. The distance between each detector element pair is about 5.15 mm. The distance to select of the detector element pair depends on the resolving capacity and the focal length the optical elements and may, dependent on the optical elements, be greater or smaller. The distance should be chosen such that the temperatures to be measured of one region that is provided for the first detector element pair may not significantly influence the measurements of the second detector element pair, that means that the measurements of the first region may be independently performed from the measurements of the second region.

In Fig. 4 the optical elements of the detector apparatus 1000 are shown in a schematic side view. The detector apparatus has an infrared detector 1010. The infrared detector 1010 includes a casing 1016, in which detector electronics (not shown) is placed. In front of the detector elements 1012a, 1012b, 1012c, 1012d as well as reference element 1016 a cold shield 1020 or a cold shield aperture 1020 is disposed that has respectively next to the detector elements 1012a, 1012b, 1012c, 1012d an opening 1022a, 1022b, 1022c, 1022d that represents an aperture. Each detector element 1012a, 1012b, 1012c, 1012d together with the cold shield aperture 1020 operates optimally with optics with a specific focal ratio. For example, each detector element 1012a, 1012b, 1012c, 1012d with the cold shield aperture 1020 functions optimally with optics 1030 with an F-number or focal ratio of 1. That means that optics 1030 with an F-number 1 achieves a high light intensity at detector elements so that signals of the detector elements must be less amplified than in case of non-suitable optics. That means that a lens 1032 of the optics is designed for the cold shield aperture 1020.

At the reference element 1016 no opening is disposed. Moreover, the reference element 1016 is metallized. The reference element 1016 serves as common reference for the first detector element pair 1012a, 1012b and for the second detector element pair 1012c, 1012d.

The optics 1030 arranged in direction of the region to be detected in front of the infrared detector 1010 defines the optical axis of the detection apparatus 1000. The detector elements 1012a, 1012b, 1012c, 1012d or the first and the second detector element pair are symmetrically arranged relative to the optical axis X. Thus, none of the detector elements 1012a, 1012b, 1012c, 1012d are arranged on the optical axis X. The optics 1030 has a lens 1032 and may include optionally an aperture 1034. Though, the dimension and the focal length of the lens in the wavelength range of infrared rays is chosen to achieve an optimal resolution of the regions to be detected with a distance of approximately 15 to 20 cm in a distance of approximately 40 to 80 cm of the detector apparatus 1000 in the region of the first detector pair 1012a, 1012b and the second detector pair 1012c, 1012d. The lens may have, for example, depending on the usage of a hot box detector 200 and a hot wheel detector 100, different focal lengths. Though, the focal length is adjusted, such that the regions to be measured are imaged with the same reproduction scale. For achieving again an F-number 1, for which the detector elements 1012a, 1012b, 1012c, 1012d with the cold shield aperture 1020 are optimized, the optics 1030 may have an aperture 1034 arranged in view of the region to be detected behind the lens 1032. The aperture 1034 is directly placed following the lens 1032, such that infrared rays of the regions to be measured, like the regions 30, 32, that pass in the lens through the optical axis X are not shielded. Additionally, the aperture 1034 improves the image quality, as the border regions of the lens 1032 are shielded that may cause unwanted image errors. Thus, the detector apparatus 1000 provides a very good resolution. For example, the first detector element pair 1012a, 1012b as well as the second detector element pair 1012c, 1012d may cover a region of the object to be measured of approximately 20 to 30 mm, wherein naturally the size of the region to be measured depends on the distance to the object. Due to the distance of the detector element pairs 1012a, 1012b and 1012c, 1012d on the infrared detector 1010 also a distance between the regions to be measured is assured. Further, the measurements of a first region to be measured may not influence the other region to be measured, i.e., infrared rays from a first region to be measured are not scattered such that all detector elements 1012a, 1012b, 1012c, 1012d detects an infrared signal.

A detector residual noise or a dark current of the detector elements 1012a, 1012b, 1012c, 1012d are removed with the reference element 1016 in form of a formation of a difference value. The detector elements 1012a, 1012b, 1012c, 1012d measure absolute temperature values of the regions to be measured. To achieve an adequate sensitivity and to protect towards environmental temperature changes that may result in a detector drift, the infrared detector 1010 or the detector elements 1012a, 1012b, 1012c, 1012d, 1016 are kept constantly at -30 degrees Celsius or in another example at a temperature different from -30 degrees Celsius. This is performed with a four stage thermoelectric cooling unit. Also, the cold shield aperture 1020 is kept at a similar temperature, for example at -30 degree Celsius. The cooling unit may be, for example, a Peltier-element. Between the optics 1030 and the infrared detector 1012 with the cold shield aperture 1022, a closing lid 1040 may be disposed having a window 1042 that restricts the wavelength. Though, the window 1042 lets pass substantial wavelengths in the infrared band that should be measured.

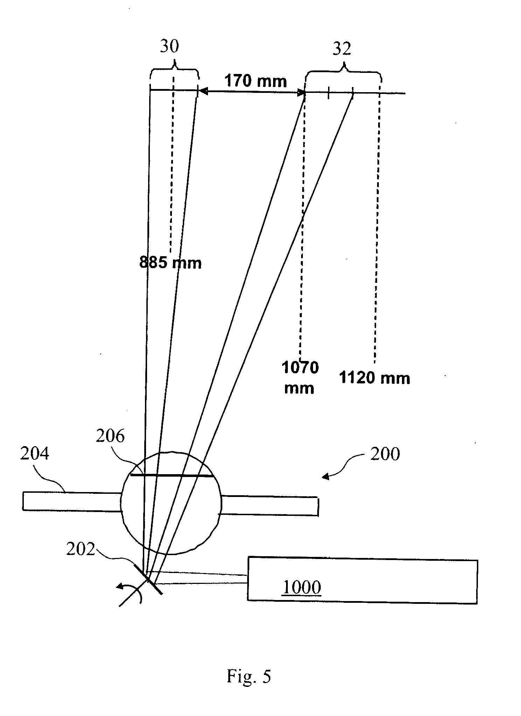

Fig. 5 shows a detector apparatus 1000 in an application for a hot box detector 200. The detector apparatus 1000 may detect two regions to be measured, namely the first region 30 and the second region 32, via a mirror 202 for deflecting infrared rays. The mirror 202 rotates about its own axis vertically to the mirror plane so that falling dirt or water is thrown away. Over the mirror 202, a covering 204 of the hot box detector 200 includes a shutter 206 that is opened only during the measurements. Though, the shutter 206 comprises at its inner side a reference heating device for calibrating the detector apparatus 1000. The mirror is a plane mirror that does not alter the image of the infrared rays of the regions to be measured. Therefore, the mirror can be arranged very close to the detector apparatus 1000 and a precise calibration of the mirror relative to the detector apparatus is not necessary.

For avoiding a covering of the region to be measured by parts of a car, it is advantageous to measure the temperature of the bearing 20 of the wheel 16 vertically from the bottom. This may be done for example as shown in Fig. 5, that the rays for the first detector element pair and a second detector element pair are mirrored with a proper mirror 202a, 202b respectively. Each mirror may be rotating about an axis perpendicular to the mirror plane, such that dirt or water is thrown away.

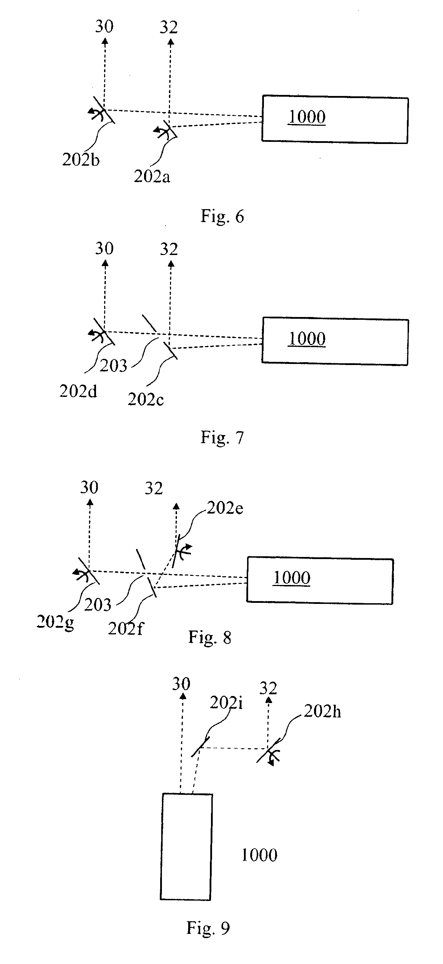

In a further example, shown in Fig. 7, the first mirror 202a may have a cutout 203 so that the infrared radiation reflected by a second mirror 202b of a first region 30 to be measured passes through the cutout 203. The second mirror 202b may be, as in the previous examples, a rotating mirror. In a further example shown in Fig. 8, the infrared radiation that is emitted from a second region 32 is reflected by a first rotating mirror 202c to a second mirror 202a having a cutout 203 to a first detector element pair. Infrared radiation of a first region 30 is reflected by a third mirror 202b to a second detector element pair of the detector apparatus 1000. Though, the infrared radiation passes through the cutout 203 in the second mirror 202a. The third mirror 202b may like the first mirror 202c be a rotating mirror.

In a further example, the detector apparatus 1000 may be arranged, such that infrared radiation of a first region 30 to be detected is directly without reflection by a mirror detected by a first detector element pair, and the infrared radiation of a second region 32 to be detected is reflected by two reflection mirrors 202a, 214d to a second detector element pair of the detector apparatus 1000. The first mirror 202a may be in this case a rotating mirror. The mirrors shown in the examples 5 to 8 are all plane mirrors, so that the optical characteristics are not altered, so that also in these cases the mirror does not have to be adjusted very accurately.

Thus, with the detector apparatus it is possible to detect without moving optical parts, apart from the rotating mirrors, a big region with several sub regions, wherein the sub regions are spaced apart from each other.

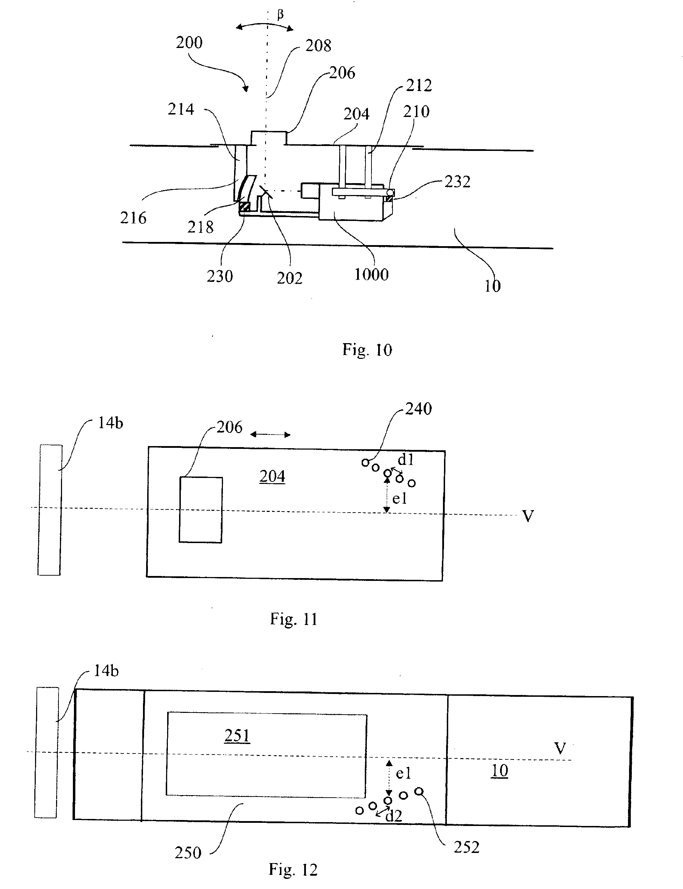

Fig. 10 shows a hot box detector 200 according to the invention in a schematic side view. The hot box detector 200 includes a detector apparatus 1000. Infrared rays of the region to be measured are reflected by the rotating mirror to the detector apparatus 1000. The hot box detector 200 includes a covering 204 with an opening that may be closed by a shutter 206, if no measurement takes place. On the inner side of the shutter 206 a reference heating is disposed that serves, when the shutter is closed, for a calibration of the detector apparatus 1000. The reference heating and the detector apparatus must, if one of those parts is exchanged, be calibrated respectively, i.e., the characteristic curves of the detector elements 1012a, 1012b, 1012c, 1012d must be readjusted. During the operation, the measurement results of the infrared radiation of the regions to be measured are compared to the infrared radiation of the reference heating. The covering of the hot box detector 200 is fixed to a tie 10. To precisely adjust an angle of view or a directed detection region 208 of the detection apparatus 1000, the detection apparatus 1000 is pivotable about an axis 210 that is mounted onto a rod 212 that is connected to the covering 204. Further, the covering 204 includes for the angle adjustment a retaining member 214 that includes an inner arc of a circle segment 216 that forms a part of a circle around the axis 210. A respective outer arc of the circle segment is connected to the detector apparatus 1000. The radius of the outer arc of a circle segment corresponds to the radius of the inner arc of a circle segment. If a desired angle adjustment is adjusted, for example a vertical directed detection region 208, the inner arc of a circle segment 216 and the outer arc of a circle segment 218 are fixed to each other, such that they are not moveable with respect to each other. The outer arc of a circle segment is connected via first spring element 230, like an elastomer spring, with the detector apparatus 1000. Again, the detector apparatus that is pivotable about the axis 210 is connected via a spring 232, like an elastomer spring 232 with the axis 210. The spring elements 230, 232 allow that the detector apparatus 1000 is not heavily shaken in case of a passing train. The covering 204 of the detection apparatus 1000 as well as the rod 212, the arc of circle segments 216, 218 as well as the retaining member 214 for the outer arc of the circle segment 216, and the shutter 208 form a unit, that can be removed as a whole from the tie 10. The optical elements of the unit, namely the detector apparatus 1000, the mirror 202 and the shutter 206 with the reference heating element are in a fixed relationship with respect to each other and may be removed as a unit in this fixed arrangement with respect to each other from the tie 10. Thus, the hot box detector 200 may be calibrated and adjusted externally to the track, and if the calibration has been carried out it can be quickly installed. A calibration and adjustment of the measurement unit is very time-consuming. Therefore, the blocking time of the track is very low.

The covering 204 is in one embodiment fixed to a frame 250 on the tie as shown in Fig. 11 and 12. The frame 250 comprises a cutout 251 into which the detector apparatus 1000 is inserted. To adjust a precise distance perpendicular to the rail 14b at discrete positions, the covering 204 has, as shown in Fig. 11, close to the border on the inner side or under side of the covering respectively a row of blind holes 240 tapering towards a reference line V parallel to the displacement direction. The blind holes are for example disposed in regular spacing d1 on the row. The displacement direction is in the present example perpendicular to the rail 14b. To determine a defined relative position, the covering 204 is guided perpendicular to the rail 14b on which a train may drive, i.e., in the displacement direction. The guidance may be performed by a separate guiding rail or by a border of the cutout 251 in the frame 250 onto which the covering 204 is fixed. In a further embodiment a detector apparatus that is fixed to the covering may be displaceable only on a line in the displacement direction due to space requirements, such that the covering is guided by this mechanism. The blind holes 240 are arranged on the particular straight line oblique to the reference line V. For example, the row has an angle of 20 to 70 degrees to the reference line. The reference line V may be parallel to a symmetry line of the covering or be the symmetry line or the guiding line. The blind holes are adapted such that a pin fits. The tie 10 includes, as it is shown in Fig. 12, the frame 250 that is adapted to the covering 204. The covering 204 and the frame 250 have the same reference line V, if the covering 204 is properly placed on the frame 250. The frame 250 includes close to a border on the upper side a row of bores 252 tapering to the reference line V and corresponding to the blind holes 240, wherein the bores have the same distance e1 to the reference line V as the blind holes in the covering 204. That means, each blind hole 240 in the covering has the same distance to the reference line V as one bore 252 in the frame 250. Additionally, the rows of blind holes 240 in the covering 204 are approximately arranged over the row of bores 252, if the covering is duly arranged on the frame 250. The distance d1 of two adjacent bores 252 in the frame 250 is different to the distance d2 of two adjacent blind holes 240 in the covering 204. Thus, the angle between the row of bores in the frame 250 to the reference line V is different to the angle between the row of blind holes 240 and the reference line, in case the bores 252 are placed in the frame 250 in a regular distance d2 to each other. Before the mounting of the covering 204, a pin is inserted into one bore of the row of tapering bores 252. In case of a parallel displacement of the covering to 204, the position of the pin in the bore only fits in a corresponding blind hole 240 of the covering 204. Thus, if an adjustment has been performed, the hot box detector may be simply removed and a replacement apparatus can be quickly placed in the tie that is placed already in the correct distance to the rail 14b. This also reduces the working time in the track.

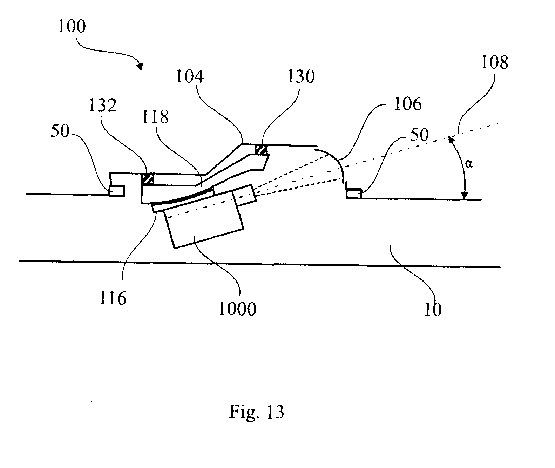

In Fig. 13 a schematic side view of a hot wheel detector 100 is shown. The hot wheel detector includes a covering 102 that is fixed with one or more spacing elements 50 in a fixed relationship to the tie 10. The spacing elements serve, to adapt the height of the hot wheel detector 100 to the usage of the rails 14a, 14b. The covering 104 has an opening that is closable by a shutter 106. On the inner side of the shutter 106 a reference heating element is disposed for performing reference measurements if no measurement of a brake is performed. Attention should be paid to the fact that the detector apparatus 1000 is accurately adjusted and adapted to the reference heating. Therefore, a characteristic curve must be created with respect to the reference heating element before the deployment of the hot wheel detector. The infrared detectors 1012a, 1012b, 1012c, 1012d must have a fixed relationship to the reference heating element that is not altered during the deployment of the hot wheel detector.

An inner arc of a circle segment 118 is connected via spring elements 132, 130 with the covering 104. Further, the hot wheel detector 100 has an outer arc of a circle segment 116 that is adapted to slide on an inner arc of a circle segment 118. That means that the radius of the inner arc of a circle segment 118 is adapted to the radius of the outer arc of a circle segment 116. At the outer arc of a circle segment 116, the detector apparatus 1000 is arranged. By fixation of a position of the outer arc of a circle relative to the inner arc of a circle segment 118 an angle α of the detection region 108 may be adjusted. The detector apparatus 1000, the inner arc of a circle segment 118, the outer arc of a circle segment 116, the spring elements 132, 130, the shutter 106 and the covering 104 are forming a unit that may be removed as a whole from the tie 10. Thus, the angle α of the detection region 108 may be adjusted outside of the track such that time costly adjustment works may be avoided on the track. Additionally, spring elements 130, 132 that may be, for example, elastomer springs provide a sufficient attenuation against shocks that may be caused by a passing train. The distance elements 50 serve to adjust the height of the hot wheel detector 100 to the height of the rail that is worn with time. The reference heating and the detector apparatus are connected in one unit such that they may be removed and installed together without changing the geometry of the detector apparatus relative to the reference heating. Thus, the hot wheel detector may be calibrated and adjusted outside the track. Therefore, with the hot wheel detector according to the invention only a short working time in the area of the track is necessary.

## Claims

1. Apparatus (100, 200) for contactless measurement of infrared radiation of at least a region of a rail car, wherein the apparatus is adapted to be arranged in a track bed with at least one rail (14a, 14b) and comprises a mounting (104, 204) with an optical element and a measurement module (1000) with an infrared sensor (1012a, 1012b, 1012c, 1012d) having a directed detection region (108, 208) such that the mounting and the measurement module (1000) from an installable unit, where in said measurement module (1000) is pivotally connected to the mounting about a pivot axis (210), and wherein the measurement module is also connected to the mounting about an inner arc of a first circle element (116, 216) and an outer arc of a second circle element (118, 218), wherein the inner arc of the first circle element and the outer arc of the second circle element are concentric, and an outer radius of the outer arc of the first circle element corresponds to an inner radius of the inner arc of the second circle element, wherein the measurement module and the optical element of the mounting are adapted to have a fixed geometry with respect to each other, and wherein an angle between the directed detection region (108, 208) and the mounting is adjustable with an angle adjusting mechanism (116, 118, 210, 216, 218) comprising the first circle element (116, 216), the second circle element (118, 218) and the pivot axis (210) such that, if a desired angle adjustment is adjusted, the inner arc of the first circle element (116, 216) and the outer arc of the second circle element (118, 218) are fixed to each other, such that they are not moveable with respect to each other, wherein in particular a continuous angular range between the directed detection region (108, 208) and the mounting (104, 204) is adjustable.

2. Apparatus according to claim 1, wherein the measurement module (1000) is elastically connected by an elastic bearing (130, 132, 230, 232) with the mounting (104, 204).

3. Apparatus according to one of the claims 1 or 2, wherein the optical element of the mounting is a shutter (106, 206) for interrupting the infrared radiation between the object (20, 22, 24, 30, 32) to measure and the measurement module (1000), wherein the shutter comprises in the direction of the measurement module a reference heating element.

4. Apparatus according to one of the claims 1 to 3, comprising a mirror, in particular a plane mirror, wherein the mirror is connected to the measurement module, such that mirror, measurement module and optical element of the mounting are adapted to have a fixed geometry relative to each other.

## Patentansprüche

1. Vorrichtung (100, 200) zur kontaktlosen Messung von Infrarotstrahlung mindestens einer Region eines Schienenfahrzeugs, wobei die Vorrichtung dazu angepasst ist, in einem Gleisbett mit mindestens einer Schiene (14a, 14b) angeordnet zu werden, und einen Rahmen (104, 204) mit einem optischen Element und ein Messmodul (1000) mit einem Infrarotsensor (1012a, 1012b, 1012c, 1012d) enthält, der eine gerichtete Detektionsregion (108, 208) aufweist, so dass der Rahmen und das Messmodul (1000) eine installierbare Einheit bilden, wobei das Messmodul (1000) schwenkbar um eine Schwenkachse (210) mit dem Rahmen verbunden ist und ferner um einen Innenbogen eines ersten Kreiselements (116, 216) und einen Außenbogen eines zweiten Kreiselements (118, 218) mit dem Rahmen verbunden ist, wobei der Innenbogen des ersten Kreiselements und der Außenbogen des zweiten Kreiselements konzentrisch sind und ein Außenradius des Außenbogens des ersten Kreiselements einem Innenradius des Innenbogens des zweiten Kreiselements entspricht, wobei das Messmodul und das optische Element des Rahmens dazu angepasst sind, relativ zueinander eine festgelegte Geometrie aufzuweisen, und wobei ein Winkel zwischen der gerichteten Detektionsregion (108, 208) und dem Rahmen mittels eines Winkeleinstellmechanismus (116, 118, 210, 216, 218) einstellbar ist, der das erste Kreiselement (116, 216), das zweite Kreiselement (118, 218) und die Schwenkachse (210) enthält, so dass, wenn eine gewünschte Winkeleinstellung eingestellt ist, der Innenbogen des ersten Kreiselements (116, 216) und der Außenbogen des zweiten Kreiselements (118, 218) zueinander festgelegt sind, so dass sie relativ zueinander nicht bewegbar sind, wobei insbesondere ein kontinuierlicher Winkelbereich zwischen der gerichteten Detektionsregion (108, 208) und dem Rahmen (104, 204) einstellbar ist.

2. Vorrichtung nach Anspruch 1, bei der das Messmodul (1000) durch ein elastisches Lager (130, 132, 230, 232) elastisch mit dem Rahmen (104, 204) verbunden ist.

3. Vorrichtung nach Anspruch 1 oder 2, bei der das optische Element des Rahmens ein Verschluss (106, 206) zum Unterbrechen der Infrarotstrahlung zwischen dem zu messenden Objekt (20, 22, 24, 30, 32) und dem Messmodul (1000) ist, wobei der Verschluss in der Richtung des Messmoduls ein Referenzheizelement enthält.

4. Vorrichtung nach einem der Ansprüche 1 bis 3, mit einem Spiegel, insbesondere einem Planspiegel, wobei der Spiegel mit dem Messmodul verbunden ist, so dass der Spiegel, das Messmodul und das optische Element des Rahmens dazu angepasst sind, relativ zueinander eine festgelegte Geometrie aufzuweisen.

## Revendications

1. Appareil (100, 200) pour la mesure sans contact de la radiation infrarouge d'au moins une région d'un véhicule ferroviaire, dans lequel l'appareil est adapté pour être placé dans une assiette de la voie avec au moins un rail (14a, 14b) et comprend un montage (104, 204) avec un élément optique et un module (1000) de mesure avec un détecteur infrarouge (1012a, 1012b, 1012c,1012d) ayant une région de détection orientée (108, 208) de façon à ce que le montage et le module (1000) de mesure forment un élément instable, dans lequel ledit module (1000) de mesure est aussi connecté de façon pivotante au montage autour d'un axe (210) de pivot, et dans lequel le module de mesure est aussi connecté au montage autour d'un arc intérieur d'un premier élément de cercle (116, 216) et un arc extérieur d'un second élément de cercle (118, 218), dans lequel l'arc intérieur du premier élément de cercle et l'arc extérieur du second élément de cercle sont concentriques, et un rayon extérieur de l'arc extérieur du premier élément de cercle correspond à un rayon intérieur de l'arc intérieur du second élément de cercle, dans lequel le module de mesure et l'élément optique du montage sont adaptés pour avoir une géométrie fixée l'un par rapport à l'autre, et dans lequel un angle entre la région (108, 208) de détection orientée et le montage est ajustable avec un mécanisme d'ajustement d'angle (116, 118, 210, 216, 218) comprenant le premier élément de cercle (116, 216), le second élément de cercle (118, 218) et l'axe de pivot (210) de telle façon que si un ajustement d'angle désiré est ajusté, l'arc intérieur du premier élément de cercle (116, 216) et l'arc extérieur du second élément de cercle (118, 218) sont fixés l'un à l'autre, de façon à ce qu'ils ne soient pas déplaçables l'un par rapport à l'autre, dans lequel, en particulier, un intervalle angulaire continu entre la région de détection orientée (108, 208) et le montage (104, 204) est ajustable.

2. Appareil selon la revendication 1, dans lequel le module (1000) de mesure est connecté de façon élastique par un support élastique (130, 132, 230, 232) avec le montage (104, 204).

3. Appareil selon une des revendications 1 ou 2, dans lequel l'élément optique du montage est un obturateur (106, 206) pour interrompre la radiation infrarouge entre l'objet (20, 22, 24, 30, 32) à mesurer et le module (1000) de mesure, dans lequel l'obturateur comprend un élément chauffant de référence dans la direction du module de mesure.

4. Appareil selon l'une des revendications 1 à 3, comprenant un miroir, en particulier un miroir plan, dans lequel le miroir est connecté au module de mesure, de telle façon que le miroir, le module de mesure et l'élément optique du montage sont adaptés pour avoir une géométrie fixée l'un par rapport à l'autre.
